# EUROPÄISCHE PATENTSCHRIFT

(11) **EP 3 391 612 B1**
(45) Veröffentlichungstag und Bekanntmachung des Hinweises auf die Patenterteilung: **10.11.2021**
(21) Anmeldenummer: 16812905.4
(22) Anmeldetag: 14.12.2016
(51) Int. Cl.: H04L 29/06, H04L 9/08, H04W 12/04, H04W 12/30

(54) **VEREINBARUNG VON AUSTAUSCH-SCHLÜSSELN AUSGEHEND VON ZWEI STATISCHEN ASYMMETRISCHEN SCHLÜSSEL-PAAREN**
AGREEMENT OF EXCHANGE KEYS ON THE BASIS OF TWO STATIC ASYMMETRIC KEY PAIRS
ACCORD DE CLÉS D'ÉCHANGE À PARTIR DE DEUX PAIRES DE CLÉS ASYMÉTRIQUES STATIQUES

(30) Priorität: 15.12.2015 DE 102015016302
(43) Veröffentlichungstag der Anmeldung: 24.10.2018
(73) Patentinhaber: Giesecke+Devrient Mobile Security GmbH, 81677 München (DE)
(72) Erfinder: GOLLER, Gabriel, 86161 Augsburg (DE); BAUER, Sven, 85591 Vaterstetten (DE); PULKUS, Jürgen, 80469 München (DE); HOFFMANN, Lars, 80639 München (DE)
(74) Vertreter: Giesecke + Devrient IP
(86) Internationale Anmeldenummer: PCT/EP2016/002111
(87) Internationale Veröffentlichungsnummer: WO 2017/102080

(56) Entgegenhaltungen:
- EP-A1- 2 538 606
- US-B2- 9 100 175
- DOHERTY RSA A ET AL: "Dynamic Symmetric Key Provisioning Protocol (DSKPP); draft-doherty-keyprov-dskpp-01.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, Nr. 1, 8. Juli 2007 (2007-07-08), XP015050878, ISSN: 0000-0004
- Elaine Barker ET AL: "NIST Special Publication 800-56A Revision 2 Recommendation for Pair-Wise Key Establishment Schemes Using Discrete Logarithm Cryptography", Recommendation for Pair-Wise Key Establishment Schemes Using Discrete Logarithm Cryptography, 1. Mai 2013 (2013-05-01), XP055336658, DOI: 10.6028/NIST.SP.800-56Ar2 Gefunden im Internet: URL:http://nvlpubs.nist.gov/nistpubs/Speci alPublications/NIST.SP.800-56Ar2.pdf [gefunden am 2017-01-18] in der Anmeldung erwähnt

## Beschreibung

### Gebiet der Erfindung

Die Erfindung betrifft ein Verfahren zur Vereinbarung von Austausch-Schlüsseln, zwischen einem Teilnehmeridentitätsmodul und einem Provisionierungs-Server, ausgehend von einem statischen individuellen asymmetrischen Schlüsselpaar des Teilnehmeridentitätsmoduls und einem statischen asymmetrischen Schlüsselpaar des Provisionierungs-Servers. Ein solches Verfahren ist in NIST SP 800-56Ar2 als C(0e, 2s)-Schlüsselschema offenbart.

### Stand der Technik

Die Welt ist mobil vernetzt, und die mobile Vernetzung schreitet weiter. Mobile und stationäre Endgeräte kommunizieren über Mobilfunknetze. Zu den klassischen mobilen Endgeräten zählen die Smartphones und Mobiltelefone. Zu Endgeräten, die je nach konkretem Anwendungsfall stationär oder mobil sein können, zählen Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Zur Nutzung eines Endgeräts, insbesondere eines mobilen Endgeräts wie Smartphones oder Mobiltelefons, in einem Mobilfunknetzwerk eines Netzbetreibers enthält das Endgerät ein Teilnehmeridentitätsmodul mit einem Subskriptions Profil oder kurz Profil. Das Profil bewerkstelligt die Konfiguration des Endgeräts und der Verbindung des Endgeräts im Mobilfunknetz. Das Profil ist durch einen Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Teilnehmeridentitätsmodul kann entweder als entfernbare Plug-In SIM-Karte (SIM = Subscriber Identity Module) oder USIM-Karte (Universal SIM) oder UICC (Universal Integrated Circuit Card) gestaltet sein, oder alternativ als festeingelötetes eUICC (embedded UICC) oder eSIM oder eUSIM, oder weiter alternativ als integrated UICC oder IUICC (bzw. iSIM, iUSIM etc.), integriert auf der Chipfläche eines Chips (Silicon-On-Chip SoC) des Endgeräts, oder weiter alternativ als rein in Software gestaltetes Software-SIM.

Das Profil eines Teilnehmeridentitätsmoduls lässt sich durch einen Provisionierungs-Server oder OTA-Server über eine Fernverbindung (remote) bearbeiten, z.B. einrichten, löschen, verändern, aktualisieren etc.. Die Bearbeitung von Profilen in einem Teilnehmeridentitätsmodul einschließlich einrichten, löschen, ändern etc. von Profilen wird auch als Provisionierung des Teilnehmeridentitätsmoduls bezeichnet. Damit bei der Provisionierung eine gesicherte, insbesondere verschlüsselte und/oder authentisierte, Verbindung zwischen dem Teilnehmeridentitätsmodul und dem Provisionierungs-Server betrieben werden kann, ist es erforderlich, dass das Teilnehmeridentitätsmodul und der Provisionierungs-Server untereinander Austausch-Schlüssel für Verschlüsselung und/oder Authentisierung vereinbaren.

Die Vereinbarung von Austausch-Schlüsseln kann vom Grundsatz her basierend auf asymmetrischer Kryptographie oder auf symmetrischer Kryptographie erfolgen.

Das Dokument [1] NIST SP 800-56Ar2, *NIST Special Publication 800-56A Revision* 2, *Recommendation for Pair-Wise Key Establishment Schemes Using Discrete Logarithm Cryptography,* offenbart ein Verfahren zur Vereinbarung von Austausch-Schlüsseln zwischen zwei Parteien basierend auf asymmetrischer Kryptographie (zB Diffie-Hellman). [1] Kap. 6.3 offenbart genauer das C(0e, 2s)-Schlüsselschema zur Vereinbarung von Austausch-Schlüsseln, zwischen einer Partei U und einer Partei V. In Unterkapiteln zu 6.3 sind mehrere Ausführungsformen des C(0e, 2s)-Schlüsselschemas detailliert beschrieben. Beim C(0e, 2s)-Schlüsselschema legt jede der beiden Parteien U, V ein eigenes statisches asymmetrisches Schlüsselpaar PrivK-PubK mit jeweils einem privaten Schlüssel PrivKU/V und einem öffentlichen Schlüssel PubKU/V fest (2s = zwei statische Schlüsselpaare). Eine der beiden Parteien, hier U, legt zudem einen zufälligen Nonce N (eine Zufallszahl) fest, z.B. indem U den Nonce N erzeugt. Partei U sendet den Nonce N an Partei V. Die Parteien U, V senden sich gegenseitig ihre öffentlichen Schlüssel PubKU bzw. PubKV zu. Jede Partei (U,V) leitet aus dem eigenen privaten Schlüssel PrivK(U,V) und dem öffentlichen Schlüssel PubK(V,U) der jeweils anderen Partei (V,U) ein untereinander geteiltes Geheimnis Z ab (d.h. Partei U und Partei V haben nun jede das gleiche Geheimnis Z). Aus dem geteilten Geheimnis Z und dem zufälligen Nonce N berechnet jede der beiden Parteien U, V die Austausch-Schlüssel K. Das C(0e, 2s)-Schlüsselschema kann dabei insbesondere als Diffie Hellman DH Schlüsselschema gestaltet sein, oder noch genauer als Finite Field Cryptography FFCDH oder alternativ als Elliptic Curve Cryptography ECC CDH Schlüsselschema. Die Berechnung der Austausch-Schlüssel K aus dem Geheimnis Z und dem Nonce N erfolgt nach einem der in Kapitel 5.8 angegebenen Schlüsselableitungs-Verfahren, und mittels eines zwischen den Parteien festgelegten Algorithmus. Das Geheimnis Z wird erzeugt, zur Ableitung der Austausch-Schlüssel K verwendet, und dann wieder zerstört (z.B. gelöscht). Die Austausch-Schlüssel K werden im Folgenden mit K bezeichnet. K kann dabei eine Anzahl von ein, zwei, mehreren, ... einzelnen Schlüsseln bezeichnen.

Auf asymmetrischer Kryptographie beruhende Verfahren zur Vereinbarung von Austausch-Schlüsseln, wie das C(0e, 2s)-Schlüsselschema, erfordern, dass beide Parteien U, V Berechnungen zur Vereinbarung der Austausch-Schlüssel K durchführen können. Manche Teilnehmeridentitätsmodule haben relativ begrenzte Mengen an Rechenkapazität und Speichervermögen und können durch Berechnungen zur Ableitung der Austausch-Schlüssel K wie sie in [1] NIST SP 800-56Ar2 angegeben sind überfordert sein. Ein Vorteil asymmetrischer Verfahren ist, dass die Parteien keine geheimen Austausch-Schlüssel direkt austauschen, sondern nur unkritische Vorprodukte geheimer Austausch-Schlüssel austauschen und die geheimen Austausch-Schlüssel jeweils selbst berechnen.

Ein auf symmetrischer Kryptographie beruhendes Verfahren zur Vereinbarung von Austausch-Schlüsseln beruht darauf, dass die Austausch-Schlüssel mit einem symmetrischen Hauptschlüssel verschlüsselt sind, über den beide Parteien verfügen. Im Fall von Teilnehmeridentitätsmodulen und Provisionierungs-Servern sind beispielsweise die für jedes Teilnehmeridentitätsmodul individuellen Austausch-Schlüssel mit demselben Hauptschlüssel verschlüsselt, über den der Provisionierungs-Server verfügt. Ein Provisionierungs-Server, der gesichert Provisionierungs-Daten an ein Teilnehmeridentitätsmodul senden möchte, lässt sich vom Teilnehmeridentitätsmodul die mit dem Hauptschlüssel verschlüsselten individuellen Austausch-Schlüssel zusenden, empfängt die verschlüsselten Austausch-Schlüssel und entschlüsselt sie mit dem Hauptschlüssel. Anschließend verschlüsselt der Provisionierungs-Server die Provisionierungs-Daten mit einem Austausch-Schlüssel des Teilnehmeridentitätsmoduls und sendet die verschlüsselten Provisionierungs-Daten an das Teilnehmeridentitätsmodul. Ein Ausspähen des Hauptschlüssels führt dazu, dass die geheimen Austausch-Schlüssel sämtlicher Teilnehmeridentitätsmodule, bei denen der Hauptschlüssel verwendet wird, öffentlich werden. Ein Vorteil symmetrischer Verfahren ist, dass das Teilnehmeridentitätsmodul mit geringen Mengen an Rechenkapazität und Speichervermögen auskommt, so dass auch wenig leistungsfähige Teilnehmeridentitätsmodule symmetrische Verfahren nutzen können.

Das Dokument [2] WO 2015/124371 A1 offenbart ein Verfahren zum Übertragen eines permanenten individuellen Zufallsschlüssels durch ein UICC aus einer Mehrzahl von UICCs, die jedes einen solchen Zufallsschlüssel haben, an einen entfernten Server über einen gesicherten Kanal anlässlich eines erstmaligen Verbindens des UICC mit dem Server. Temporäre geheime Daten SD0 bzw. SD1 zur Einrichtung des sicheren Kanals wurden vor Herstellen der erstmaligen Verbindung beim UICC bzw. beim Server abgespeichert und können nach Beenden der Verbindung auch wieder gelöscht werden. Dadurch dass als individueller Schlüssel ein Zufallsschlüssel und kein von einem Masterschlüssel abgeleiteter Schlüssel verwendet wird, gibt es keinen Masterschlüssel, dessen Verlust ein Sicherheitsrisiko wäre.

Die Dokumente US 9 100 175 B2 und EP 2 538 606 A1 aus dem Stand der Technik offenbaren Verfahren zum Ableiten von Austausschlüsseln zwischen einem Teilnehmeridentitätsmodul und eine Provisionierungsserver. Produktionsserver sind am Ableiten der Austauschschlüssel nicht beteiligt.

### Zusammenfassung der Erfindung

Der Erfindung liegt die Aufgabe zu Grunde, ein Verfahren zur Vereinbarung von Austausch-Schlüsseln zwischen einem Teilnehmeridentitätsmodul und einem Provisionierungs-Server zu schaffen, das auch bei Teilnehmeridentitätsmodulen mit geringen Mengen an Rechenkapazität oder/und Speichervermögen anwendbar ist, und das gleichzeitig sicher ist.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist zum Einrichten eines Teilnehmeridentitätsmoduls zur Vereinbarung von ein oder mehreren Austausch-Schlüsseln, zwischen einem Teilnehmeridentitätsmodul und einem Provisionierungs-Server, ausgehend von asymmetrischen Schlüsseldaten eingerichtet.

Die Schlüsseldaten umfassen ein individuelles asymmetrisches Schlüsselpaar des Teilnehmeridentitätsmoduls. Das Schlüsselpaar umfasst einen privaten Schlüssel, im Folgenden auch genannt PrivK(SIM), und einen öffentlichen Schlüssel, im Folgenden auch genannt PubK(SIM). Die Schlüsseldaten umfassen weiter ein statisches asymmetrisches Schlüsselpaar des Provisionierungs-Servers, umfassend einen privaten Schlüssel, genannt PrivK(OTA), und einen öffentlichen Schlüssel, genannt PubK(OTA).

Das Verfahren umfasst die Schritte:
a) Erzeugen des für das Teilnehmeridentitätsmodul individuellen statischen asymmetrischen Schlüsselpaars, umfassend den öffentlichen Schlüssel PubK(SIM) und den privaten Schlüssel PrivK(SIM); b) Erzeugen des asymmetrischen Schlüsselpaars des Provisionierungs-Servers, umfassend den öffentlichen Schlüssel PubK(OTA) und den privaten Schlüssel PrivK(OTA);
c) Erzeugen der ein oder mehreren Austausch-Schlüssel unter Verwendung des privaten Schlüssels PrivK(SIM) des Teilnehmeridentitätsmodul und des öffentlichen Schlüssels PubK(OTA) des Provisionierungs-Servers. Das Verfahren ist dadurch gekennzeichnet, dass Schritt a) und Schritt c) auf einem Produktions-Server durchgeführt werden und das Verfahren den weiteren Schritt umfasst:
   d) Übertragen und Speichern der in Schritt c) auf dem Produktions-Server erzeugten ein oder mehreren Austausch-Schlüssel vom Produktions-Server in das Teilnehmeridentitätsmodul, so dass das Teilnehmeridentitätsmodul insbesondere in einen Zustand versetzt wird, als hätte es die Austausch-Schlüssel selbst erzeugt.

Die Erfindung hat folgende Vorteile. Es wird kein Hauptschlüssel verwendet, mit dem die individuellen Austausch-Schlüssel einer Vielzahl von Teilnehmeridentitätsmodulen ausgespäht werden könnten. Bei Übertragungs-Vorgängen zwischen dem Teilnehmeridentitätsmodul und Servern (Produktions-Server und Provisionierungs-Server) werden keine geheimen Schlüssel übertragen, sondern nur öffentliche oder unkritische Daten. Insbesondere werden keine privaten asymmetrischen Schlüssel übertragen. Private asymmetrische Schlüssel werden nur in gesicherten Umgebungen vorrätig gehalten, insbesondere in der Produktionsumgebung des Produktions-Servers oder auf dem vertrauenswürdigen Provisionierungs-Server. Im Teilnehmeridentitätsmodul selbst ist keine asymmetrische Kryptographie erforderlich, so dass das Verfahren auch bei niedrigpreisigen, wenig leistungsfähigen Teilnehmeridentitätsmodulen anwendbar ist.

Daher ist gemäß Anspruch 1 ein Verfahren zur Vereinbarung von Austausch-Schlüsseln zwischen einem Teilnehmeridentitätsmodul und einem Provisionierungs-Server geschaffen, das auch bei Teilnehmeridentitätsmodulen mit geringen Mengen an Rechenkapazität oder/und Speichervermögen anwendbar ist, und das gleichzeitig sicher ist.

Ein Erzeugen von Schlüsseln wird jeweils auf einem Prozessor/ einer CPU der jeweiligen Entität (z.B. Server) durchgeführt. Ein Speichern von Schlüsseln, Zertifikaten oder ggf. anderen Daten in das Teilnehmeridentitätsmodul wird jeweils in einen Speicher des Teilnehmeridentitätsmoduls durchgeführt, bevorzugt in einen persistenten Speicher. Produktions-Server und Provisionierungs-Server haben ebenfalls die benötigten Speicher.

In dem Verfahren umfasst wahlweise Schritt c) die Teilschritte:
c1) Erzeugen eines Geheimnisses unter Verwendung des privaten Schlüssels des Teilnehmeridentitätsmodul und des öffentlichen Schlüssels des Provisionierungs-Servers;
c2) optional Erzeugen oder Bereitstellen eines zufälligen Nonce;
c3) Erzeugen der Austausch-Schlüssel ausgehend von dem Geheimnis und ggf. dem Nonce.

Das Erzeugungsverfahren für das Geheimnis unter Verwendung eines Nonce entspricht dem Erzeugungsverfahren für das Geheimnis Z gemäß dem C(0e, 2s)-Schlüsselschema aus [1] NIST SP 800-56Ar2, Kapitel 6.3. Das Erzeugungsverfahren ist allerdings auch ohne einen Nonce möglich.

Wahlweise wird Schritt b), Erzeugen des asymmetrischen Schlüsselpaars des Provisionierungs-Servers, entweder, gemäß einer ersten Alternative, auf dem Produktions-Server durchgeführt. Dabei wird zumindest der in Schritt b) erzeugte private Schlüssel (in der Produktionsphase) an den Provisionierungs-Server bereitgestellt. Alternativ, gemäß einer zweiten Alternative, wird Schritt b), Erzeugen des asymmetrischen Schlüsselpaars des Provisionierungs-Servers, auf dem Provisionierungs-Server durchgeführt. In diesem Fall wird zumindest der in Schritt b) erzeugte öffentliche Schlüssel an den Produktions-Server bereitgestellt. Mit anderen Worten erzeugt die eine Partei von Produktions-Server und Provisionierungs-Server das Schlüsselpaar. Die andere Partei bekommt denjenigen Schlüssel des Schlüsselpaars, den sie benötigt, bereitgestellt. Es wird an dieser Stelle nochmals betont, dass die hier beschriebenen Schlüssel-Austauschvorgänge in einer gesicherten Produktionsumgebung stattfinden, und nicht im Feld.

Wahlweise umfasst der Übertragungs-Schritt d) weiter: Übertragen und Speichern des öffentlichen Schlüssels des Teilnehmeridentitätsmoduls in das Teilnehmeridentitätsmodul. Der öffentliche Schlüssel des Teilnehmeridentitätsmoduls kann dann insbesondere bedarfsweise später an einen Provisionierungs-Server übertragen werden und verwendet werden, um die Austausch-Schlüssel, und dabei ggf. das Geheimnis, abzuleiten.

Wahlweise wird das Übertragen und Speichern des öffentlichen Schlüssels durch direktes Übertragen und Speichern des öffentlichen Schlüssels an das Teilnehmeridentitätsmodul durchgeführt. Dabei wird optional zusätzliche Authentisierungsinformation an das Teilnehmeridentitätsmodul übertragen und dort abgespeichert. Die Authentisierungsinformation ermöglicht eine Authentisierung des im Teilnehmeridentitätsmodul gespeicherten öffentlichen Schlüssels, hat also einen vergleichbaren Effekt wie das nachfolgend angeführte Zertifikat.

Wahlweise umfasst das Verfahren weiter den Schritt: Erzeugen eines Zertifikats über den öffentlichen Schlüssel des Teilnehmeridentitätsmoduls durch Signieren des öffentlichen Schlüssels des Teilnehmeridentitätsmoduls mit dem geheimen Schlüssel einer vertrauenswürdigen Instanz. Dabei umfasst Schritt d) Übertragen und Speichern des öffentlichen Schlüssels durch Übertragen und Speichern des Zertifikats. Der öffentliche Schlüssel wird dabei innerhalb des Zertifikats übertragen. Anhand des Zertifikats lässt sich die Authentizität des öffentlichen Schlüssels verifizieren. Entweder wird der benötigte öffentliche Schlüssel aus dem Zertifikat extrahiert. Das Extrahieren geschieht im Teilnehmeridentitätsmodul oder ggf. später in einem Provisionierungs-Server. Das Zertifikat dient somit sowohl zur Schlüsselübertragung als auch zur Authentisierung des öffentlichen Schlüssels. Alternativ wird der öffentliche Schlüssel zusätzlich zum Zertifikat mit übertragen.

Bei einem erfindungsgemäßen Verfahren zur Vereinbarung von ein oder mehreren Austausch-Schlüsseln, zwischen einem Teilnehmeridentitätsmodul (SIM) und einem Provisionierungs-Server, wird von asymmetrischen Schlüsseldaten ausgegangen.
e) Zunächst wird ein mit einem erfindungsgemäßen Verfahren eingerichtetes Teilnehmeridentitätsmodul, in das die Austauschschlüssel und zudem der eigene öffentliche Schlüssel gespeichert wurden, bereitgestellt. Weiter wird eine Kommunikations-Verbindung zwischen dem Teilnehmeridentitätsmodul und dem Provisionierungs-Server hergestellt.
f) Der öffentliche Schlüssel des Teilnehmeridentitätsmoduls wird vom Teilnehmeridentitätsmodul über die Kommunikations-Verbindung an den Provisionierungs-Server übertragen.
g) Beim Provisionierungs-Server wird der öffentliche Schlüssel des Teilnehmeridentitätsmoduls empfangen. Anhand des empfangenen öffentlichen Schlüssels wird das Teilnehmeridentitätsmodul identifiziert. Das Identifizieren des Teilnehmeridentitätsmoduls kann beispielsweise in einem Arbeitsspeicher erfolgen, insbesondere in einem flüchtigen Arbeitsspeicher.
h) Beim Provisionierungs-Server wird der eigene private Schlüssel bereitgestellt, z.B. an den Prozessor/ die CPU des Provisionierungs-Servers.
i) Beim Provisionierungs-Server wird/ werden weiter der eine oder die mehreren Austausch-Schlüssel unter Verwendung des öffentlichen Schlüssels des Teilnehmeridentitätsmodul und des eigenen privaten Schlüssels erzeugt, insbesondere auf dem Prozessor/ der CPU des Provisionierungs-Servers.

Nun verfügt der Provisionierungs-Server über das gleiche Schlüsselmaterial wie das Teilnehmeridentitätsmodul und kann mit dem Teilnehmeridentitätsmodul verschlüsselt Daten austauschen.

Schritt i) umfasst wahlweise die Teilschritte: i1) Erzeugen des Geheimnisses unter Verwendung des öffentlichen Schlüssels des Teilnehmeridentitätsmoduls und des privaten Schlüssels des Provisionierungs-Servers. i2) Erzeugen der Austausch-Schlüssel ausgehend von dem Geheimnis (und ggf. dem Nonce (N), vgl. nachfolgend). Schritt f) umfasst wahlweise, falls ein Nonce verwendet wird, weiter: Übermitteln des Nonce vom Teilnehmeridentitätsmodul an den Provisionierungs-Server. In diesem Fall, dass ein Nonce verwendet wird, werden die Austauschschlüssel ausgehend von dem Geheimnis und unter Verwendung des Nonce berechnet.

Wahlweise werden die asymmetrischen Schlüsseldaten nach dem Erzeugen der ein oder mehreren Austausch-Schlüssel, sobald sie nicht mehr benötigt werden, vernichtet, insbesondere gelöscht.

Wahlweise wird das Geheimnis nach dem Erzeugen der ein oder mehreren Austausch-Schlüssel, sobald es nicht mehr benötigt wird, vernichtet, insbesondere gelöscht.

Bei einem Verfahren zur Übertragung von verschlüsselten Daten zwischen einem Teilnehmeridentitätsmodul und einem Provisionierungs-Server werden die Daten, beim Teilnehmeridentitätsmodul oder beim Provisionierungs-Server, mit Austausch-Schlüsseln verschlüsselt, die mit einem erfindungsgemäßen Verfahren erzeugt wurden, und an die andere Partei (Provisionierungs-Server oder Teilnehmeridentitätsmodul) übertragen.

Als asymmetrische Schlüsselpaare sind wahlweise Diffie-Hellman-Schlüsselpaare vorgesehen, insbesondere ein Diffie-Hellman Schlüsselpaar des Teilnehmeridentitätsmoduls und ein Diffie-Hellman Schlüsselpaar des Provisionierungs-Servers.

### Kurze Beschreibung der Zeichnungen

Im Folgenden wird die Erfindung an Hand von Ausführungsbeispielen und unter Bezugnahme auf die Zeichnung näher erläutert, in der zeigt:

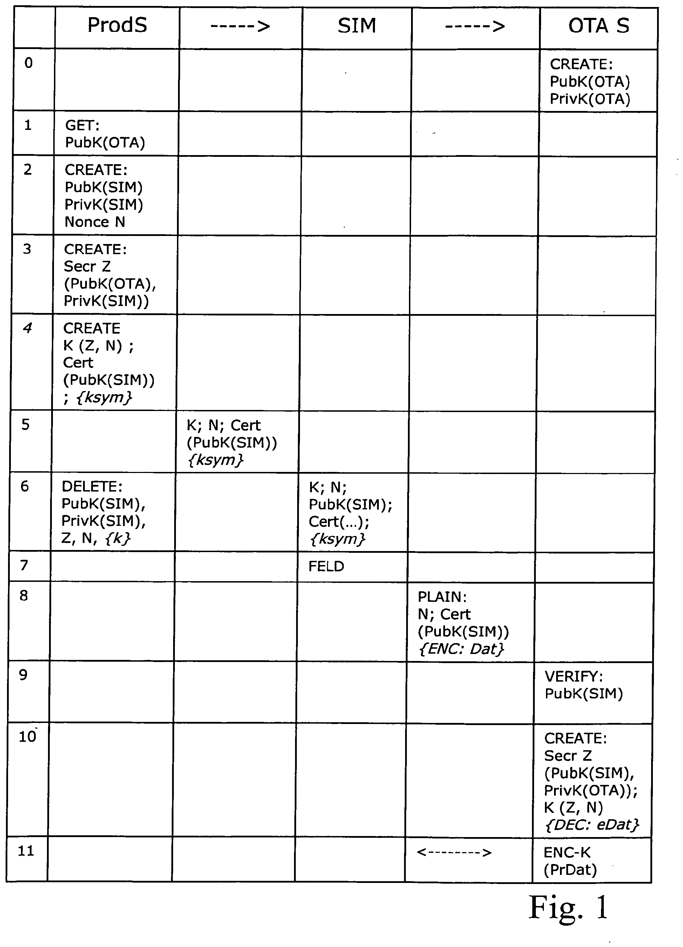

Fig. 1 ein System zur Veranschaulichung der Erfindung.

### Detaillierte Beschreibung von Ausführungsbeispielen

Fig. 1 zeigt ein System zur Veranschaulichung der Erfindung. Das System umfasst einen Produktions-Server ProdS, ein Teilnehmeridentitätsmodul SIM und eine Provisionierungs-Server oder OTA-Server OTA S. Der Produktions-Server ProdS und der Provisionierungs-Server OTA S verfügen über einen asymmetrischen kryptographischen Algorithmus und über einen Prozessor, beispielsweise eine CPU oder/und eine Krypto-Coprozessor, um den asymmetrischen kryptographischen Algorithmus auszuführen, also asymmetrische kryptographische Berechnungen durchzuführen. In Fig. 1 sind in Großbuchstaben gesetzte Pseudo-Kommandos angezeigt, umfassend GET für Empfang von Daten, CREATE für Erzeugung von Daten, DELETE für Löschen von Daten und VERIFY für Verifizierung von Daten, PLAIN für unverschlüsselte Datenübertragung, ENC für Verschlüsselung oder verschlüsselte Eigenschaft von Daten, DEC für Entschlüsselung oder entschlüsselte Eigenschaft von Daten. Zwischen den Entitäten Produktions-Server ProdS und Teilnehmeridentitätsmodul SIM sowie zwischen den Entitäten Teilnehmeridentitätsmodul SIM und Provisionierungs-Server OTA S verlaufen Pfeile, um Datenübertragung zwischen Entitäten anzuzeigen.

Der Produktions-Server ProdS ist bei einem Hersteller von Teilnehmeridentitätsmodulen aufgestellt, um die Teilnehmeridentitätsmodule zu personalisieren, indem beispielsweise die individuelle International Subscriber Mobile Identity IMSI, der individuelle Authentisierungsschlüssel Ki und dergleichen Daten in das jeweilige Teilnehmeridentitätsmodul SIM programmiert werden. Die Erfindung geht davon aus, dass der Produktions-Server ProdS gerade die Aufgabe hat, ein bestimmtes individuelles Teilnehmeridentitätsmodul SIM zu programmieren. Für die Programmierung mehrerer Teilnehmeridentitätsmodule SIM würde das Verfahren vom Grundsatz her im Wesentlichen mehrmals durchgeführt.

Gemäß der Erfindung werden im Rahmen der Produktion des Teilnehmeridentitätsmoduls SIM zusätzliche Produktionsschritte vorgenommen, die bei der herkömmlichen Produktion nicht erfolgen. Hierbei wird das Teilnehmeridentitätsmodul SIM mit zusätzlichen Daten programmiert, die später, wenn das Teilnehmeridentitätsmodul SIM im Feld ist und sich in ein Kommunikationsnetz (Mobilfunknetz) einwählt, dem Teilnehmeridentitätsmodul SIM den Anschein verleihen, es wäre für die Durchführung von Berechnungen gemäß einem asymmetrischen Krypto-Algorithmus eingerichtet, beispielsweise für ein Diffie-Hellman Schlüssel-Vereinbarungs-Verfahren.

In einem Schritt 0 wird durch den Provisionierungs-Server OTA S, der später, wenn das Teilnehmeridentitätsmodul SIM im Feld ist, verschlüsselte Daten an das Teilnehmeridentitätsmodul SIM senden soll, ein asymmetrisches, z.B. Diffie-Hellman, Schlüsselpaar erzeugt, das einen öffentlichen Schlüssel PubK(OTA) und einen privaten Schlüssel PrivK(OTA) umfasst.

In einem Schritt 1 stellt der Provisionierungs-Server OTA S den öffentlichen Schlüssel PubK(OTA) an den Produktions-Server ProdS bereit, oder der Produktions-Server ProdS ruft den Schlüssel PubK(OTA) beim Provisionierungs-Server OTA S ab (Pseudo-Kommando "GET").

In einem Schritt 2 erzeugt (CREATE) der Produktions-Server ProdS für das Teilnehmeridentitätsmodul SIM ein individuelles asymmetrisches, z.B. Diffie-Hellman, Schlüsselpaar, das einen individuellen öffentlichen Schlüssel PubK(SIM) und einen individuellen privaten Schlüssel PrivK(SIM) umfasst, die für das Teilnehmeridentitätsmodul SIM individuell sind. Weiter erzeugt (CREATE) der Produktions-Server ProdS einen zufälligen Nonce N.

In einem Schritt 3 erzeugt (CREATE) der Produktions-Server ProdS aus dem öffentlichen Schlüssel PubK(OTA) des Provisionierungs-Servers OTA S und dem privaten Schlüssel PrivK(SIM) des Teilnehmeridentitätsmoduls SIM ein Geheimnis Z, das auch für das Teilnehmeridentitätsmodul SIM individuell ist. Das Geheimnis Z wird beispielsweise wie im Dokument [1] NIST SP 800-56Ar2, Kap. 6.3 beschrieben nach dem C(0e, 2s)-Schlüsselschema berechnet.

In einem Schritt 4 erzeugt (CREATE) der Produktions-Server ProdS aus dem Geheimnis Z und dem Nonce N die Austausch-Schlüssel K für das Teilnehmeridentitätsmodul SIM, die nun ebenfalls für das Teilnehmeridentitätsmodul SIM individuell sind. Weiter erzeugt der Produktions-Server ProdS durch Signieren des öffentlichen Schlüssels des Teilnehmeridentitätsmoduls SIM ein Zertifikat Cert(PubK(SIM)) oder kurz Cert(...). Mittels des Zertifikats Cert(...) kann später der Provisionierungs-Server OTA S verifizieren, ob die Austausch-Schlüssel K des Teilnehmeridentitätsmoduls SIM tatsächlich aus einem zulässigen Produktionsstandort kommen, und nicht etwa von einem Angreifer selbst erzeugt worden sind. Optional erzeugt der Produktions-Server ProdS an dieser Stelle zudem einen symmetrischen Schlüssel k zum verschlüsselten Austausch von sonstigen Daten, z.B. von begleitenden Daten. Der symmetrische Schlüssel k ist der Vollständigkeit halber erwähnt und für die Erfindung nicht wesentlich.

In einem Schritt 5 werden die benötigten Daten vom Produktions-Server ProdS an das Teilnehmeridentitätsmodul SIM übertragen. Übertragen werden insbesondere die Austausch-Schlüssel K, der Nonce N und das Zertifikat Cert(PubK(SIM)). Durch Übertragen des Zertifikats wird implizit der öffentliche Schlüssel PubK(SIM) an das Teilnehmeridentitätsmodul SIM übertragen. Optional kann der öffentliche Schlüssel PubK(SIM) zusätzlich explizit übertragen werden. Optional wird ggf. der symmetrische Schlüssel k übertragen.

In einem Schritt 6 werden die folgenden Daten im Teilnehmeridentitätsmodul SIM abgespeichert: die Austausch-Schlüssel K, der Nonce N, der öffentliche Schlüssel PubK(SIM) (nun explizit, d.h. außerhalb des Zertifikats, wozu ggf. der öffentliche Schlüssel PubK(SIM) zuvor aus dem Zertifikat Cert(...) extrahiert worden ist) und das Zertifikat Cert(...). Optional wird ggf. der symmetrische Schlüssel k im Teilnehmeridentitätsmodul SIM abgespeichert. Die angegebenen Daten werden hierbei in einen persistenten, nichtflüchtigen Speicher des Teilnehmeridentitätsmoduls SIM abgespeichert. Beim Produktions-Server ProdS werden an irgendeinem Zeitpunkt nach dem Erzeugen des Geheimnisses Z die beiden Schlüssel öffentlicher Schlüssel PubK(SIM) und privater Schlüssel PrivK(SIM) des asymmetrischen Schlüsselpaars des Teilnehmeridentitätsmoduls SIM und der öffentliche Schlüssel PubK(OTA) des Provisionierungs-Servers OTA S gelöscht.

In einem Schritt 7 wird das Teilnehmeridentitätsmodul SIM ins Feld gebracht. Hierzu wird das Teilnehmeridentitätsmodul SIM beispielweise an einen Händler oder Endkunden übergeben. Hierbei ist es unerheblich, ob das Teilnehmeridentitätsmodul SIM als Plug-In Modul, d.h. SIM-Karte oder USIM-Karte etc., ins Feld gebracht wird, oder als festimplementiertes, "embedded" eUICC oder "integrated" iUICC, bereits zusammen mit einem Endgerät. Im Fall eines Plug-In Moduls wird das Teilnehmeridentitätsmodul SIM zudem in ein Endgerät (z.B. Smartphone) eingesetzt.

In einem Schritt 8 kontaktiert das Teilnehmeridentitätsmodul SIM mittels des Endgeräts, in dem es betrieben wird, den Provisionierungs-Server OTA S, um Daten abzurufen. Hierbei sendet das Teilnehmeridentitätsmodul SIM an den Provisionierungs-Server OTA S, in unverschlüsselter Plaintext-Form (PLAIN), seinen öffentlichen asymmetrischen Schlüssel PubK(SIM), das Zertifikat Cert(...) über seinen öffentlichen asymmetrischen Schlüssel PubK(SIM), sowie den Nonce N.

In einem Schritt 9 verifiziert der Provisionierungs-Server OTA S das vom Teilnehmeridentitätsmodul SIM empfangene Zertifikat Cert(...) und verifiziert hierdurch den öffentlichen asymmetrischen Schlüssel PubK(SIM) des Teilnehmeridentitätsmoduls SIM. Schlägt die Verifizierung fehlt, endet das Verfahren der Schlüssel-Vereinbarung hier, und kann ggf. neu gestartet werden. Ist die Verifizierung des asymmetrischen Schlüssel PubK(SIM) des Teilnehmeridentitätsmoduls SIM erfolgreich, wird das Verfahren der Schlüssel-Vereinbarung weitergeführt mit Schritt 10.

In Schritt 10 erzeugt der Provisionierungs-Server OTA S mit dem vom Teilnehmeridentitätsmodul SIM empfangenen öffentlichen asymmetrischen Schlüssel PubK(SIM) des Teilnehmeridentitätsmoduls SIM und mit seinem eigenen privaten asymmetrischen Schlüssel PrivK(OTA) das Geheimnis Z. Mit dem selbst erzeugten Geheimnis Z und dem vom Teilnehmeridentitätsmodul SIM empfangenen Nonce N erzeugt (CREATE) der Provisionierungs-Server OTA S die Austausch-Schlüssel K. Nun hat der Provisionierungs-Server OTA S die Austausch-Schlüssel K für verschlüsselten DatenAustausch mit dem Teilnehmeridentitätsmodul SIM, so als hätte das Teilnehmeridentitätsmodul SIM selbst ein Schlüssel-Vereinbarungs-Verfahren wie Diffie-Hellman durchgeführt.

In einem Schritt 11 sendet der Provisionierungs-Server OTA S an das Teilnehmeridentitätsmodul SIM verschlüsselte Provisionierungs-Daten PrDat, die mit einem Verschlüsselungsschlüssel aus den Austausch-Schlüsseln K verschlüsselt sind. Bedarfsweise werden mit Authentisierungs-Schlüsseln aus den Austausch-Schlüsseln K Authentisierungen durchgeführt. Bedarfsweise sendet das Teilnehmeridentitätsmodul SIM an den Provisionierungs-Server OTA S verschlüsselte Daten, die ebenfalls mit einem Verschlüsselungsschlüssel aus den Austausch-Schlüsseln K verschlüsselt sind.

### Zitierter Stand der Technik

[1] NIST SP 800-56Ar2, NIST Special Publication 800-56A Revision 2, Recommendation for Pair-Wise Key Establishment Schemes Using Discrete Logarithm Cryptography
[2] WO 2015/124371 A1

## Patentansprüche

1. Verfahren zum Einrichten eines Teilnehmeridentitätsmoduls (SIM) zur Vereinbarung von ein oder mehreren Austausch-Schlüsseln (K), zwischen einem Teilnehmeridentitätsmodul (SIM) und einem Provisionierungs-Server (OTA S), ausgehend von asymmetrischen Schlüsseldaten,
die asymmetrischen Schlüsseldaten umfassend ein individuelles statisches asymmetrisches Schlüsselpaar des Teilnehmeridentitätsmoduls (SIM), umfassend einen privaten Schlüssel (PrivK(SIM)) und einen öffentlichen Schlüssel (PubK(SIM)), und ein statisches asymmetrisches Schlüsselpaar des Provisionierungs-Servers (OTA S), umfassend einen privaten Schlüssel (PrivK(OTA)) und einen öffentlichen Schlüssel (PubK(OTA)), das Verfahren umfassend die Schritte:
a) Erzeugen des für das Teilnehmeridentitätsmodul (SIM) individuellen asymmetrischen Schlüsselpaars, umfassend den öffentlichen Schlüssel (PubK(SIM)) und den privaten Schlüssel (PrivK(SIM));
b) Erzeugen des asymmetrischen Schlüsselpaars des Provisionierungs-Servers (OTA S), umfassend den öffentlichen Schlüssel (PubK(OTA)) und den privaten Schlüssel (PrivK(OTA));
c) Erzeugen der ein oder mehreren Austausch-Schlüssel (K) unter Verwendung des privaten Schlüssels (PrivK(SIM)) des Teilnehmeridentitätsmodul (SIM) und des öffentlichen Schlüssels (PubK(OTA)) des Provisionierungs-Servers (OTA-S);
**dadurch gekennzeichnet, dass**
Schritt a) und Schritt c) als zusätzliche Produktionsschritte auf einem Produktions-Server (Prod S) während einer Produktion des Teilnehmeridentitätsmoduls (SIM) durchgeführt werden und das Verfahren den weiteren Schritt umfasst: d) Übertragen und Speichern der in Schritt c) auf dem Produktions-Server (Prod S) erzeugten ein oder mehreren Austausch-Schlüssel (K) in das Teilnehmeridentitätsmodul (SIM), um das Teilnehmeridentitätsmodul (SIM) mit zusätzlichen Daten zu programmieren, die zu einem Zeitpunkt nach der Auslieferung des Teilnehmeridentitätsmoduls (SIM) beim Einwählen in ein Kommunikationsnetz dem Teilnehmeridentitätsmodul (SIM) den Anschein verleihen, es wäre für die Durchführung von Berechnungen gemäß einem asymmetrischen Kryptographie-Algorithmus eingerichtet, wobei es dazu in einen Zustand versetzt wird, als hätte es die Austausch-Schlüssel (K) selbst erzeugt.

2. Verfahren nach Anspruch 1, wobei Schritt c) die Teilschritte umfasst:
c1) Erzeugen eines Geheimnisses (Z) unter Verwendung des privaten Schlüssels (PrivK(SIM)) des Teilnehmeridentitätsmodul (SIM) und des öffentlichen Schlüssels PubK(OTA) des Provisionierungs-Servers (OTA S);
c2) optional Erzeugen oder Bereitstellen eines zufälligen Nonce (N);
c3) Erzeugen der Austausch-Schlüssel (K) ausgehend von dem Geheimnis (Z) und ggf. dem Nonce (N).

3. Verfahren nach Anspruch 1 oder 2, wobei Schritt b)
- entweder auf dem Produktions-Server (Prod S) durchgeführt wird, und wobei zumindest der in Schritt b) erzeugte private Schlüssel (PrivK(OTA)) an den Provisionierungs-Server (OAT S) bereitgestellt wird,
- oder auf dem Provisionierungs-Server (OAT S) durchgeführt wird, und wobei zumindest der in Schritt b) erzeugte öffentliche Schlüssel (PubK(OTA)) an den Produktions-Server (Prod S) bereitgestellt wird.

4. Verfahren nach einem der Ansprüche 1 bis 3, wobei Schritt d) weiter umfasst: Übertragen und Speichern des öffentlichen Schlüssels (PubK(SIM)) des Teilnehmeridentitätsmoduls (SIM) in das Teilnehmeridentitätsmodul (SIM).

5. Verfahren nach Anspruch 4, wobei Schritt d) umfasst: Übertragen und Speichern des öffentlichen Schlüssels (PubK(SIM)) durch direktes Übertragen und Speichern des öffentlichen Schlüssels (PubK(SIM)) und optional Übertragen und Speichern zusätzlicher Authentisierungsinformation, die eine Authentisierung des im Teilnehmeridentitätsmodul (SIM) gespeicherten öffentlichen Schlüssels (PubK(SIM)) ermöglicht.

6. Verfahren nach Anspruch 4, weiter umfassend den Schritt: Erzeugen eines Zertifikats (Cert(PubK(SIM))) über den öffentlichen Schlüssel (PubK(SIM)) des Teilnehmeridentitätsmoduls (SIM) durch Signieren des öffentlichen Schlüssels (PubK(SIM)) des Teilnehmeridentitätsmoduls (SIM); wobei Schritt d) umfasst: Übertragen und Speichern des öffentlichen Schlüssels (PubK (SIM)) durch Übertragen und Speichern des Zertifikats (Cert(PubK(SIM))).

7. Verfahren zur Vereinbarung von ein oder mehreren Austausch-Schlüsseln (K), zwischen einem Teilnehmeridentitätsmodul (SIM) und einem Provisionierungs-Server (OTA S), ausgehend von asymmetrischen Schlüsseldaten, das Verfahren umfassend die Schritte:
e) Bereitstellen eines mit einem Verfahren nach einem der Ansprüche 4 bis 6 eingerichteten Teilnehmeridentitätsmoduls (SIM) und Herstellen einer Kommunikations-Verbindung zwischen dem Teilnehmeridentitätsmodul (SIM) und dem Provisionierungs-Server (OTA S);
f) Übermitteln des öffentlichen Schlüssels (PubK(SIM)) des Teilnehmeridentitätsmoduls (SIM) vom Teilnehmeridentitätsmodul (SIM) an den Provisionierungs-Server (OTA S);
g) Beim Provisionierungs-Server (OTA S), Empfangen des öffentlichen Schlüssels (PubK(SIM)) des Teilnehmeridentitätsmoduls (SIM) und Identifizieren des Teilnehmeridentitätsmoduls (SIM) anhand des empfangenen öffentlichen Schlüssels (PubK(SIM));
h) Beim Provisionierungs-Server (OTA S), Bereitstellen des privaten Schlüssels (PrivK(OTA)) des Provisionierungs-Servers (OTA S);
i) Beim Provisionierungs-Server (OTA S), Erzeugen der ein oder mehreren Austausch-Schlüssel (K) unter Verwendung des öffentlichen Schlüssels (PubK(SIM)) des Teilnehmeridentitätsmodul (SIM) und des privaten Schlüssels PrivK(OTA) des Provisionierungs-Servers (OTA-S).

8. Verfahren nach Anspruch 7, wobei: falls ein Nonce verwendet wird, Schritt f) weiter umfasst: Übermitteln des Nonce (N) gemäß Anspruch 2 vom Teilnehmeridentitätsmodul (SIM) an den Provisionierungs-Server (OTA S); und Schritt i) die Teilschritte umfasst: i1) Erzeugen des Geheimnisses (Z) unter Verwendung des öffentlichen Schlüssels (PubK(SIM)) des Teilnehmeridentitätsmoduls (SIM) und des privaten Schlüssels PrivK(OTA) des Provisionierungs-Servers (OTA-S); i2) Erzeugen der Austausch-Schlüssel (K) ausgehend von dem Geheimnis (Z) und ggf. dem Nonce (N).

9. Verfahren nach einem der Ansprüche 1 bis 8, wobei die asymmetrischen Schlüsseldaten nach dem Erzeugen der ein oder mehreren Austausch-Schlüssel (K) vernichtet werden, insbesondere gelöscht werden.

10. Verfahren nach Anspruch 2 oder 8, wobei das Geheimnis (Z) nach dem Erzeugen der ein oder mehreren Austausch-Schlüssel (K) vernichtet wird, insbesondere gelöscht wird.

11. Übertragungs-Verfahren, wobei Daten mit Austausch-Schlüsseln (K) verschlüsselt werden und die verschlüsselten Daten zwischen einem Teilnehmeridentitätsmodul (SIM) und einem Provisionierungs-Server (OTA S) übertragen werden, wobei die Austausch-Schlüssel (K) mit einem Verfahren nach einem der Ansprüche 1 bis 10 erzeugt wurden.

12. Verfahren nach einem der Ansprüche 1 bis 11, wobei als asymmetrische Schlüsselpaare Diffie-Hellman-Schlüsselpaare vorgesehen sind, insbesondere ein Diffie-Hellman Schlüsselpaar (PrivK(SIM), PubK(SIM))) des Teilnehmeridentitätsmoduls (SIM) und ein Diffie-Hellman Schlüsselpaar (PrivK(OTA), (PubK(OTA)) des Provisionierungs-Servers (OTA S).

## Claims

1. Method for setting up a subscriber identity module (SIM) for the agreement of one or several exchange keys (K), between a subscriber identity module (SIM) and a provisioning server (OTA S), proceeding from asymmetric key data,
the asymmetric key data comprising an individual static asymmetric key pair of the subscriber identity module (SIM), comprising a private key (PrivK(SIM)) and a public key (PubK(SIM)), and a static asymmetric key pair of the provisioning server (OTA S), comprising a private key (PrivK(OTA)) and a public key (PubK(OTA)),
the method comprising the steps of:
a) generating the asymmetric key pair individual for the subscriber identity module (SIM), comprising the public key (PubK(SIM)) and the private key (PrivK(SIM));
b) generating the asymmetric key pair of the provisioning server (OTA S), comprising the public key (PubK(OTA)) and the private key (PrivK(OTA));
c) generating the one or several exchange keys (K) employing the private key (PrivK(SIM)) of the subscriber identity module (SIM) and the public key (PubK(OTA)) of the provisioning server (OTA-S);
**characterized in that**
step a) and step c) are performed as additional production steps on a production server (Prod S) during a production of the subscriber identity module (SIM), and the method comprises the further step of: d) transmitting and storing the one or several exchange keys (K) generated in step c) on the production server (Prod S) into the subscriber identity module (SIM), to program the subscriber identity module (SIM) with additional data, which at a point in time after the delivery of the subscriber identity module (SIM) when dialling into a communication network give the subscriber identity module (SIM) the appearance that it is configured to perform calculations according to an asymmetric cryptography algorithm, wherein it is put into a state as though it had generated the exchange keys (K) itself.

2. Method according to claim 1, wherein step c) comprises the partial steps of:
c1) generating a secret (Z) employing the private key (PrivK(SIM)) of the subscriber identity module (SIM) and the public key (PubK(OTA)) of the provisioning server (OTA S);
c2) optionally generating or supplying a random nonce (N);
c3) generating the exchange keys (K) proceeding from the secret (Z) and the nonce (N), where applicable.

3. Method according to claim 1 or 2, wherein step b)
- is performed either on the production server (Prod S), and wherein at least the private key (PrivK(OTA)) generated in step b) is supplied to the provisioning server (OAT S),
- or is performed on the provisioning server (OAT S), and wherein at least the public key (PubK(OTA)) generated in step b) is supplied to the production server (Prod S).

4. Method according to any one of claims 1 to 3, wherein step d) further comprises: transmitting and storing the public key (PubK(SIM)) of the subscriber identity module (SIM) into the subscriber identity module (SIM).

5. Method according to claim 4, wherein step d) comprises: transmitting and storing the public key (PubK(SIM)) by directly transmitting and storing the public key (PubK(SIM)), and optionally transmitting and storing additional authentication information, which permit an authentication of the public key (PubK(SIM)) stored in the subscriber identity module (SIM).

6. Method according to claim 4, further comprising the step of: generating a certificate (Cert(PubK(SIM))) over the public key (PubK(SIM)) of the subscriber identity module (SIM) by signing the public key (PubK(SIM)) of the subscriber identity module (SIM); wherein step d) comprises: transmitting and storing the public key (PubK(SIM)) by transmitting and storing the certificate (Cert(PubK(SIM))).

7. Method for agreement of one or several exchange keys (K), between a subscriber identity module (SIM) and a provisioning server (OTA S), proceeding from asymmetric key data, the method comprising the steps of:
e) supplying a subscriber identity module (SIM) set up with the method according to any one of claims 4 to 6 and establishing a communication connection between the subscriber identity module (SIM) and the provisioning server (OTA S);
f) transferring the public key (PubK(SIM)) of the subscriber identity module (SIM) from the subscriber identity module (SIM) to the provisioning server (OTA S);
g) in the provisioning server (OTA S), receiving the public key (PubK(SIM)) of the subscriber identity module (SIM) and identifying the subscriber identity module (SIM) by means of the received public key (PubK(SIM));
h) in the provisioning server (OTA S), supplying the private key (PrivK(OTA)) of the provisioning server (OTA S);
i) in the provisioning server (OTA S), generating the one or several exchange keys (K) employing the public key (PubK(SIM)) of the subscriber identity module (SIM) and the private key (PrivK(OTA)) of the provisioning server (OTA-S).

8. Method according to claim 7, wherein: if a nonce is used, step f) further comprises: transferring the nonce (N) from the subscriber identity module (SIM) to the provisioning server (OTA S) according to claim 2; and step i) comprises the partial steps of: i1) generating the secret (Z) employing the public key (PubK(SIM)) of the subscriber identity module (SIM) and the private key (PrivK(OTA)) of the provisioning server (OTA-S); i2) generating the exchange keys (K) proceeding from the secret (Z) and the nonce (N), where applicable.

9. Method according to any one of claims 1 to 8, wherein the asymmetric key data are destroyed, in particular deleted, after generating the one or several exchange keys (K).

10. Method according to claim 2 or 8, wherein the secret (Z) is destroyed, in particular deleted, after generating the one or several exchange keys (K).

11. Transmission method, wherein data are encrypted with exchange keys (K) and the encrypted data are transmitted between a subscriber identity module (SIM) and a provisioning server (OTA S), wherein the exchange keys (K) have been generated with a method according to any one of claims 1 to 10.

12. Method according to any one of claims 1 to 11, wherein as asymmetric key pairs Diffie-Hellman key pairs are provided, in particular a Diffie-Hellman key pair (PrivK(SIM)), (PubK(SIM)) of the subscriber identity module (SIM) and a Diffie Hellman key pair (PrivK(OTA)), (PubK(OTA)) of the provisioning server (OTA S).

## Revendications

1. Procédé pour configurer un module d'identité de l'abonné (SIM) pour s'accorder sur une ou plusieurs clés d'échange (K), entre un module d'identité de l'abonné (SIM) et un serveur de provisionnement (OTA S), en partant de données de clés asymétriques,
les données de clés asymétriques comportant une paire de clés asymétrique statique individuelle du module d'identité de l'abonné (SIM), comportant une clé privée (PrivK(SIM)) et une clé publique (PubK(SIM)), et une paire de clés asymétrique statique du serveur de provisionnement (OTA S), comportant une clé privée (PrivK(OTA)) et une clé publique (PubK(OTA)), le procédé comportant les étapes consistant à :
a) générer la paire de clés asymétrique individuelle pour le module d'identité de l'abonné (SIM), comportant la clé publique (PubK(SIM)) et la clé privée (PrivK(SIM)) ;
b) générer la paire de clés asymétrique du serveur de provisionnement (OTA S), comportant la clé publique (PubK(OTA)) et la clé privée (Priv(OTA)) ;
c) générer la ou les clés d'échange (K) en utilisant la clé privée (PrivK(SIM)) du module d'identité de l'abonné (SIM) et la clé publique (PubK(OTA)) du serveur de provisionnement (OTA S) ;
**caractérisé en ce que**
l'étape a) et l'étape c) sont réalisées sous forme d'étapes de production supplémentaires sur un serveur de production (Prod S) pendant une production du module d'identité de l'abonné (SIM) et le procédé comporte l'étape supplémentaire consistant à : d) transmettre et stocker une ou plusieurs clés d'échange (K) dans le module d'identité de l'abonné (SIM) générées sur le serveur de production (Prod S), afin de programmer le module d'identité de l'abonné (SIM) avec des données supplémentaires qui, à un instant après la livraison du module d'identité de l'abonné (SIM), donnent l'impression au module d'identité de l'abonné (SIM), lors de la connexion à un réseau de communication, d'avoir été configuré pour réaliser des calculs selon un algorithme de cryptographie asymétrique dans lequel il serait placé dans un état où il générerait lui-même les clés d'échange (K).

2. Procédé selon la revendication 1, dans lequel l'étape c) comporte les sous-étapes consistant à :
c1) générer une information secrète (Z) en utilisant la clé privée (PrivK(SIM)) du module d'identité de l'abonné (SIM) et la clé publique (PubK(OTA)) du serveur de provisionnement (OTA S) ;
c2) générer facultativement ou fournir un nonce aléatoire (N) ;
c3) générer les clés d'échange (K) en partant de l'information secrète (Z) et du nonce (N) le cas échéant.

3. Procédé selon la revendication 1 ou 2, dans lequel l'étape b) est réalisée
- soit sur le serveur de production (Prod S) et dans lequel au moins la clé privée (PrivK(OTA)) générée à l'étape b) est fournie au serveur de provisionnement (OTA S),
- soit sur le serveur de provisionnement (OAT S) et dans lequel au moins la clé publique (PubK(OTA)) générée à l'étape b) est fournie au serveur de production (Prod S).

4. Procédé selon l'une des revendications 1 à 3, dans lequel l'étape d) comporte en outre la sous-étape consistant à : transmettre et stocker la clé publique (PubK(SIM)) du module d'identité de l'abonné (SIM) dans le module d'identité de l'abonné (SIM).

5. Procédé selon la revendication 4, dans lequel l'étape d) comporte la sous-étape consistant à : transmettre et stocker la clé publique (PubK(SIM)) en transmettant directement et en stockant la clé publique (PubK(SIM)) et transmettre et stocker facultativement des informations d'authentification supplémentaires qui permettent une authentification de la clé publique (PubK(SIM)) stockée dans le module d'identité de l'abonné (SIM).

6. Procédé selon la revendication 4, comportant en outre l'étape consistant à : générer un certificat (Cert(PubK(SIM))) via la clé publique (PubK(SIM)) du module d'identité de l'abonné (SIM) en signant la clé publique (PubK(SIM)) du module d'identité de l'abonné (SIM) ; dans lequel l'étape d) comporte la sous-étape consistant à : transmettre et stocker la clé publique (PubK(SIM)) en transmettant et en stockant le certificat (Cert(PubK(SIM))).

7. Procédé pour s'accorder sur une ou plusieurs clés d'échange (K), entre un module d'identité de l'abonné (SIM) et un serveur de provisionnement (OTA S), en partant de données de clés asymétriques,
le procédé comportant les étapes consistant à :
e) fournir un module d'identité de l'abonné (SIM) configuré par un procédé selon l'une des revendications 4 à 6 et établir une liaison de communication entre le module d'identité de l'abonné (SIM) et le serveur de provisionnement (OTA S) ;
f) transmettre la clé publique (PubK(SIM)) du module d'identité de l'abonné (SIM) du module d'identité de l'abonné (SIM) au serveur de provisionnement (OTA S) ;
g) sur le serveur de provisionnement (OTA S), recevoir la clé publique (PubK(SIM)) du module d'identité abonné (SIM) et identifier le module d'identité de l'abonné (SIM) au moyen de la clé publique (PubK(SIM)) reçue ;
h) sur le serveur de provisionnement (OTA S), fournir la clé privée (PrivK(OTA)) du serveur de provisionnement (OTA S) ;
i) sur le serveur de provisionnement (OTA S), générer la ou les clés d'échange (K) en utilisant la clé publique (PubK(SIM)) du module d'identité de l'abonné (SIM) et la clé privée (PrivK(OTA) du serveur de provisionnement (OTA S).

8. Procédé selon la revendication 7, dans lequel : si un nonce est utilisé, l'étape f) comporte en outre la sous-étape consistant à : transmettre le nonce (N) selon la revendication 2 du module d'identité de l'abonné (SIM) au serveur de provisionnement (OTA S) ; et l'étape i) comporte les sous-étapes consistant à : i1) générer l'information secrète (Z) en utilisant la clé publique (PubK(SIM)) du module d'identité de l'abonné (SIM) et la clé privée (PrivK(OTA)) du serveur de provisionnement (OTA S) ; i2) générer la clé d'échange (K) à partir de l'information secrète (Z) et du nonce (N) le cas échéant.

9. Procédé selon l'une des revendications 1 à 8, dans lequel les données de clés asymétriques sont détruites, en particulier supprimées, après la génération de la ou des clés d'échange (K).

10. Procédé selon la revendication 2 ou 8, dans lequel l'information secrète (Z) est détruite, en particulier supprimée, après la génération de la ou des clés d'échange (K).

11. Procédé de transmission, dans lequel des données sont cryptées avec des clés d'échange (K) et les données cryptées sont transmises entre un module d'identité de l'abonné (SIM) et un serveur de provisionnement (OTA S), dans lequel les clés d'échange (K) ont été générées par un procédé selon l'une des revendications 1 à 10.

12. Procédé selon l'une des revendications 1 à 11, dans lequel des paires de clés Diffie-Hellman sont prévues en tant que paires de clés asymétriques, en particulier une paire de clés Diffie-Hellman (PrivK(SIM), PubK(SIM))) du module d'identité de l'abonné (SIM) et une paire de clés Diffie-Hellman (PrivK(OTA), (PubK(OTA)) du serveur de provisionnement (OTA S).
